# EUROPÄISCHE PATENTANMELDUNG

(11) **EP 0 796 878 A2**
(43) Veröffentlichungstag der Anmeldung: **24.09.1997**
(21) Anmeldenummer: 97103814.6
(22) Anmeldetag: 07.03.1997
(51) Int. Cl.: C08F 279/04

(54) **Verfahren zur Herstellung von ABS-Formmassen**

(30) Priorität: 20.03.1996 DE 19610931
(71) Anmelder: BAYER AG, 51368 Leverkusen (DE)
(72) Erfinder: Ostarek, Ralph, Dr., 40215 Düsseldorf (DE); Eichenauer, Herbert, Dr., 41539 Dormagen (DE); Piejko, Karl-Erwin, Dr., Longmeadow, MA 01106 (US); Wingler, Frank, Dr., 51373 Leverkusen (DE); Wulff, Claus, Dr., 47800 Krefeld (DE)

(57) **Zusammenfassung**

Verfahren zur Herstellung von ABS-Formmassen worin eine Lösung von Polymeren in Lösungsmitteln der Gruppe (A) allmählich zu einem in Polymerisation befindlichen Gemisch aus vorgebildetem, löslichem Kautschuk, aromatischen Monoalkenyl-Verbindungen, ethylenisch ungesättigten Nitrilen, gegebenenfalls weiteren copolymerisierbaren Verbindungen, sowie gegebenenfalls einem Lösungsmittel aus der Gruppe (B) oder einen Gemisch aus Lösungsmitteln der Gruppen (A) und (B) zugefügt wird, wobei die allmähliche Zugabe der Lösung des Polymeren zu dem polymerisierenden Gemisch vor Beginn der Phaseninversion bei einem Umsatz der Monomeren von 5 bis 15 % und einer Viskosität des polymerisierenden Gemischs unter 20 Pa·sec bei gleichzeitiger Weiterführung der Polymerisation begonnen wird, das Lösungsmittel der Gruppe (A) ein aliphatischer (C₁-C₈) oder cycloaliphatischer Alkohol, Keton, Ether, Ester und/oder Nitril, und das Lösungsmittel der Gruppe (B) ein aliphatischer (C₄-C₁₀), cycloaliphatischer und/oder aromatischer Kohlenwasserstoff ist.

## Beschreibung

Die Erfindung betrifft ein Verfahren zur Herstellung von ABS-Formmassen durch Dosierung einer Lösung von in polaren Lösungsmitteln gelösten Polymeren zu einem in Polymerisation befindlichen Gemisch aus vorgebildetem, löslichem Kautschuk, aromatischen Monoalkenyl-Verbindungen, ethylenisch ungesättigten Nitrilen und gegebenenfalls weiteren copolymerisierbaren Verbindungen wie Ester und Amide der Acryl- und Methacrylsäure, Maleinsäureanhydrid und dessen Derivate, Methylenbernsteinsäureanhydrid und dessen Derivate, sowie gegebenenfalls einem weiteren Lösungsmittel.

Das erfindungsgemäße Verfahren erfordert nur eine einfache Polymerisationstechnik und erlaubt aufgrund einer deutlich verringerten Viskoelastizität während der Phaseninversion die Verwendung hoher Kautschukgehalte. Die erfindungsgemäßen Produkte besitzen je nach zugegebenem Polymer hohe Schlagzähigkeit, hohe Härte, hellen Rohton, matte Oberfläche, Transluzenz, hohe Wärmeformbeständigkeit sowie ein hervorragendes Verarbeitungsverhalten.

Ziel der Erfindung ist ein betriebssicheres Verfahren zur Herstellung von ABS-Formmassen, das auch bei hohen Kautschukgehalten aufgrund einer verringerten Viskosität der Polymerisationslösung ohne spezielle Hochviskostechnik auskommt und Produkte ergibt, die aufgrund ausreichend guter Dispergierung der Kautschukteilchen gute mechanische Eigenschaften besitzen.

Gegenstand der Erfindung ist ein Verfahren zur Herstellung von ABS-Formmassen worin eine Lösung von Polymeren in Lösungsmitteln der Gruppe (A) allmählich einem in Polymerisation befindlichen Gemisch aus vorgebildetem, löslichem Kautschuk, aromatischen Monoalkenyl-Verbindungen, ethylenisch ungesättigten Nitrilen, gegebenenfalls weiteren copolymerisierbaren Verbindungen sowie gegebenenfalls einem Lösungsmittel aus der Gruppe (B) oder einem Gemisch aus Lösungsmitteln der Gruppen (A) und (B) zugefügt wird, wobei die allmähliche Zugabe der Lösung des Polymeren zu dem polymerisierenden Gemisch vor Beginn der Phaseninversion bei einem Umsatz der Monomeren von 5 bis 15 % und einer Viskosität des polymerisierenden Gemischs unterhalb von 20 Pa·sec bei gleichzeitiger Weiterführung der Polymerisation begonnen wird, das Lösungsmittel der Gruppe (A) ein aliphatischer (C₁-C₈) oder cycloaliphatischer Alkohol, Keton, Ether, Ester und/oder Nitril, und das Lösungsmittel der Gruppe (B) ein aliphatischer (C₄-C₁₀), cycloaliphatischer und/oder aromatischer Kohlenwasserstoff ist.

In einer besonderen Ausführungsform des erfindungsgemäßes Verfahrens werden
(1) 90 bis 20 Gewichtsteile aromatische Monoalkenyl-Verbindung,
(2) 10 bis 50 Gewichtsteile ethylenisch ungesättigtes Nitril,
(3) gegebenenfalls 0 bis 30 Gewichtsteile weiterer, mit (1) und (2) copolymerisierbarer Verbindungen wie Ester oder Amide der Acryl- oder Methacrylsäure, Maleinsäureanhydrid oder dessen Derivate, Methylenbernsteinsäureanhydrid oder dessen Derivate
   in Gegenwart von
(4) 6 bis 50 Gewichtsteilen eines löslichen, gelfreien Kautschuks
   in Anwesenheit von
(5) 0 bis 200 Gewichtsteilen eines Lösungsmittels der Gruppe (B) oder eines Gemisches aus Lösungsmitteln der Gruppe (A) und (B)
(6) bis zu einem Monomerenumsatz, bezogen auf Summe der Monomeren (1 bis 3), von 5 bis 15 Gew.% unter Rühren radikalisch initiiert polymerisiert.
   Zu diesem in Polymerisation befindlichen Gemisch werden innerhalb eines Zeitraums von bevorzugt 0,5 bis 4,5 Stunden kontinuierlich
(7) 20 bis 400 Gewichtsteile einer 5 bis 50 Gew.%igen Lösung eines Polymers in einem Lösungsmittel oder einem Lösungsmittelgemisch aus der Gruppe (A) zugesetzt
   und
(8) die radikalisch initiierte Polymerisation bis zu einem Monomerenumsatz, bezogen auf die Summe der Monomere (1-3), von 30 bis 99 Gew.% unter Durchmischen weitergeführt.

Kautschuk-modifizierte Formmassen aus aromatischen Vinylmonomeren und ethylenisch ungesättigten Nitrilmonomeren sind als ABS-Formmassen bekannt.

Sie können durch wässrige Emulsionspolymerisation, Suspensions- oder Masse/Lösungs-Polymerisation hergestellt werden. Masse- und Lösungspolymerisation sind z.B. in Houben Weyl, Methoden der organischen Chemie, Band E 20/Teil 1, S. 182-217, Georg Thieme Verlag Stuttgart, beschrieben. Nachteile der bekannten Verfahren sind hohe Temperaturen, die Polymerisation unter Druck, das Auftreten hoher Viskositäten, sowie die mit höheren Drucken und Temperaturen verbundenen Sicherheitsaspekte.

Bei der Massepolymerisation, z.B. nach US-PS 4 587 294, US-PS 5 286 792 oder EP-A 376 232, werden üblicherweise geringe Mengen an Lösemitteln zugesetzt, um durch Siedekühlung ein Durchgehen der Polymerisation zu verhindern. Größere Mengen Lösemittel sind unerwünscht (vgl. US-PS 4 587 294), da sie die Wirtschaftlichkeit des Verfahrens herabsetzen.

Für die Eigenschaften der durch Masse/Lösungs-Polymerisation hergestellten ABS-Produkte ist die Gestalt der Kautschukteilchen wichtig. Diese hängt unter anderem von den Bedingungen während der Phaseninversion ab.

Die Lösung des Kautschuks in den Monomeren und gegebenenfalls einem Lösungsmittel wird üblicherweise thermisch oder mit radikalischen Initiatoren polymerisiert. Sofort nach Beginn der Polymerisation bildet sich eine in der Kautschuklösung dispergierte Phase von Polymerisat gelöst in den Monomeren. Mit der Erhöhung des Umsatzes erhöht sich auch die Menge an disperser Phase. Gleichzeitig steigt die Viskosität der Polymerisationslösung stetig an. Steigt der Umsatz soweit, daß die Menge an disperser Phase die Menge an kontinuierlicher Phase übersteigt, kommt es zur Phaseninversion, während der die vorher als kontinuierliche Phase vorliegende Kautschuklösung zur dispersen Phase wird und damit die Kautschukteilchen gebildet werden. Man erkennt die Phaseninversion an einem Abfall der Viskosität der Polymerisationslösung. Der Beginn der Phaseninversion stellt somit ein Maximum im Viskositätsverlauf dar.

Die Gestalt der Kautschukteilchen hängt u.a. von den Polymerisationsbedingungen, den Scherbedingungen, der Viskosität und dem Kautschukgehalt ab. Da die Größe, die Form und der Füllgrad der in der Harzmatrix verteilten Kautschukteilchen Eigenschaften wie Zähigkeit, Steifigkeit, Kautschukeffizienz und Oberflächenbeschaffenheit der Polymeren beeinflussen, sind eine Vielzahl von Maßnahmen beschrieben worden, um Kautschukteilchengröße und Füllgrad gezielt einzustellen.

So beschreibt EP-A 15 752, daß die Kautschukteilchen vergrößert werden, wenn ein Teil der Polymerisationslösung nach einem Umsatz von 20 bis 38 % in den ersten Reaktor zurückgeführt wird, um die Viskosität der Lösung zum Zeitpunkt der Phaseninversion zu erhöhen. In EP-A 15 751 wird das gleiche Ziel damit erreicht, daß die Ausgangslösung des Kautschuks in den Monomeren vorgebildetes Polystyrol oder Styrol-Acrylnitril-Copolymerisat enthält. In DE-A 40 17 680 wird die Teilchengröße dadurch beeinflußt, daß gemeinsam mit dem Kautschuk (Styrol/Butadien-Blockcopolymer) und den Monomeren ein - mit dem Styrol des Kautschuks verträgliches, aber mit Styrol-Acrylnitril-Copolymerisat unverträgliches - Polymer in der Ausgangslösung vorgelegt wird.

Versucht man, den Kautschukgehalt im Produkt zu erhöhen, (um beispielsweise die ABS-Formmassen mit anderen Polymerisaten zu kautschuk-modifizierten Polymerblends zu compoundieren), steigt die Viskosität des Reaktionsgemisches vor der Phaseninversion in einen Bereich, der spezielle Reaktions- und Rührtechniken notwendig macht. Während der Phaseninversion kommt es zu einem starken Anstieg des elastischen Anteils der Viskosität. Dieser macht bis zu 50% der Gesamtviskosität aus. Die hohe Viskoelastizität führt zu Rührproblemen, einem breiten Viskositätsverlauf und damit zu einer ungenügenden Dispergierung der Kautschukteilchen und ungenügenden mechanischen Eigenschaften der ABS-Formmassen.

Es wurde gefunden, daß es auch bei höheren Kautschukgehalten in der Polymerisationslösung zu einer schnellen Phaseninversion und damit einem schmalen Viskositätsverlauf kommt und die Viskoelastizität während der Phaseninversion niedrig bleibt, wenn vor der Phaseninversion bei einem Umsatz von 5 bis 15 % und einer Viskosität der Polymerisationslösung unterhalb 20 Pa 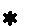 sec, bevorzugt unterhalb 10 Pa 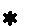 sec, eine Lösung eines geeigneten Polymeren in einem Lösungsmittel der Gruppe (A) zu dem in Polymerisation befindlichen Gemisch aus Kautschuk, aromatischer Monoalkenyl-Verbindung und ethylenisch ungesättigtem Nitril dosiert wird.

Die durch die erfindungsgemäße Zudosierung der Polymer-Lösung erreichte schnelle Erniedrigung der Viskosität der Polymerisationslösung ohne Durchlaufen von viskoelastischen Zuständen erleichtert die Rührbarkeit des Polymerisationsgemisches während der Phaseninversion. Es wird daher auch bei hohen Kautschukgehalten die Homogenität der Polymerisationslösung verbessert. Durch schnelles Rühren wird eine gleichmäßige Warmeabfuhr ohne lokale Überhitzungen sichergestellt und die Bildung von Wandbelegen verhindert. Außerdem führt die eingebrachte erhöhte Scherenergie zu Kleineren Kautschukteilchen mit engerer Teilchengrößen-Verteilung.

Die durch die erfindungsgemäße Zudosierung der Polymer-Lösung auch bei hohen Kautschukgehalten verbesserte Reaktionsführung führt somit zu einer hohen Reproduzierbarkeit von qualitätsbestimmenden Parametern wie Molekulargewicht, Umsatz und Pfropfgrad, sowie Gestalt, Größe und Füllgrad der Kautschukteilchen. Die verbesserte Reaktionsführung erlaubt, mit einfacher Polymerisationstechnik den Kautschukgehalt der ABS-Formmassen soweit zu erhöhen, daß diese nachfolgend mit anderen Polymerisaten zu kautschuk-modifizierten Polymerblends compoundiert werden können.

Die durch die erfindungsgemäße Zudosierung der Polymer-Lösung auch bei hohen Kautschukgehalten verringerte Viskosität und Viskoelastizität führt in den - der Polymerisation nachgeschalteten - Verfahrensabschnitten ebenfalls zu Vorteilen. So sind die Anforderungen an Pumpen aufgrund der niedrigeren Strukturviskosität der Polymerisationslösung deutlich geringer. Außerdem kann mit einfacherer Eindampftechnik gearbeitet werden, da auch die eingedampfte Polymerschmelze über eine geringere Viskoelastizität verfügt.

Die erfindungsgemäße Zudosierung der Polymer-Lösungen ermöglicht außerdem, ABS-Formmassen mit speziellen mechanischen Eigenschaften herzustellen. Wie die Beispiele 9 bis 16 zeigen, führt die Zugabe von Lösungen von N-Phenylmaleinimid- oder α-Methylstyrol-enthaltenden Copolymeren zu ABS-Formmassen, die über eine erhöhte Wärmeformbeständigkeit (Vicat B 120: 108 bis 114°C) verfügen. Die Zugabe von Lösungen von Methylmethacrylat-enthaltenden Copolymeren führt zu transluzenten ABS-Formmassen mit hervorragendem Rohton, deren Einfärbung geringere Pigmentzumischungen erfordert.

Die Beispiele 11 und 15 zeigen, daß bei Zugabe von Poly(styrol-co-acrylnitril-co-N-phenylmaleinimid) oder von Poly(styrol-co-maleinsäureanhydrid) überraschenderweise auch die Kerbschlagzähigkeit bei tiefen Temperaturen verbessert wird.

Insgesamt entsprechen oder übertreffen die nach dem erfindungsgemäßen Verfahren hergestellten ABS-Formmassen in ihrem Eigenschaftsprofil den nach dem Stand der Technik hergestellten ABS-Produkten.

Geeignete Polymere sind in Lösungsmitteln der Gruppe (A) lösliche Homo- und Copolymere hergestellt durch Polymerisation von aromatischen Monoalkenyl-Verbindungen, ethylenisch ungesättigten Nitrilen, Acrylsäuren und deren Estern sowie ungesättigten Polycarbonsäuren und deren Derivaten.

Geeignete Polymere sind außerdem in Lösungsmitteln der Gruppe (A) lösliche aromatische Polycarbonate hergestellt durch Polykondensation von Dihydroxyphenylpropan und/oder alkylsubstituierten Dihydroxyphenylcycloalkanen.

Bevorzugt sind Homo- und Copolymere hergestellt durch Polymerisation von Styrol, α-Methylstyrol, Acrylnitril, Maleinsäureanhydrid, N-Phenylmaleinimid, Methacrylsäureester oder Acrylsäureester, sowie Polymere hergestellt durch Copolykondensation von Dihydroxyphenylpropan und Dihydroxyphenyltrimethylcyclohexan.

Besonders bevorzugt sind Polymere wie Poly(styrol-co-acrylnitril), Poly(styrol-co-acrylnitril-co-N-Phenylmaleinimid), Poly(α-methylstyrol-co-acrylnitril), Poly(styrol-co-N-Phenylmaleinimid), Poly(styrol-co-maleinsäureanhydrid), Polystyrol, Poly(styrol-co-methacrylsäuremethylester), Poly(styrol-co-acrylnitril-co-methacrylsäuremethylester), Poly((α-methylstyrol-co-acrylnitril-co-methacrylsäuremethylester), Poly(methacrylsäure-methylester), Poly(methacrylsäuremethylester-co-acrylsäurebutylester) und Co- und Homo-Polycarbonate, enthaltend mindestens 10 Gew.% des Bisphenols 1,1-Bis(4-hydroxyphenyl)-3,3,5-trimethylcyclohexan.

Lösungsmittel der Gruppe (A) sind Alkohole wie Methanol, Ethanol, Propanol, Isopropanol, Butanol, Isobutanol, tert.-Butanol, Amylalkohol, Isoamylalkohol, Isooctanol, Cyclohexanol; Ketone wie Aceton, Methylethylketon, Methylisopropylketon, Methylisobutylketon, Cyclopentanon, Cyclohexanon; Ether wie Tetrahydrofuran, Dioxan, Ethylenglykoldimethyl, -diethyl, -dipropyl, -diisoproylether; Ester wie Ethylacetat, Propylacetat, Butylacetat u.a., Nitrile wie Acetonitril, Propionitril, Butyronitril. Bevorzugt werden Methylethylketon, Aceton und Tetrahydrofuran.

Lösungsmittel der Gruppe (B) sind aliphatische Kohlenwasserstoffe wie Butan, Pentan, Hexan, Heptan, Octan bzw. deren Iso-Derivate, cycloaliphatische Kohlenwasserstoffe wie Cyclopentan, Cyclohexan, Alkyl-cyclopentan, Alkyl-cyclohexan, aromatische Kohlenwasserstoffe wie Benzol, Toluol, Xylole, Ethylbenzol. Bevorzugt werden Hexan, Toluol und Ethylbenzol.

Zur Einstellung der Molmassen werden dem Stand der Technik gemaß übliche Molmassenregler wie Mercaptane und Olefine, z.B. tert.-Dodecylmercaptan, Cyclohexen, Terpinolen u.v. in Mengen von 0,05 bis 1,0 Gew.-%, bezogen auf copolymerisierende Monomere (1-3), eingesetzt.

Geeignete Initiatoren für die radikalische Polymerisation sind pfropfaktive, in Radikale zerfallende Peroxide und/oder Azo-Verbindungen. Hierzu gehören u.a. Azodiisobuttersäuredinitril, Azoisobuttersäure-alkylester, tert.-Butyl-perpivalat oder -peroctoat, oder -perbenzoat, oder -perneodecanoat. Diese Initiatoren werden in Mengen von 0,01 bis 0,5 Gew.-%, bez. auf Monomere (1-3), verwendet.

Weiter können während der Polymerisation oder im Anschluß vor der Aufarbeitung übliche Zusatzmittel wie Farbstoffe, Antioxidantien, Gleitmittel, Stabilisatoren, wie dem Fachmann bekannt, zugesetzt werden.

Als Kautschuk kommen pfropfbare, lösliche Kautschuke mit niedrigem Gelanteil in Frage. Das sind vorzugsweise Polybutadiene mit einem 1,2-Vinylgehalt von 2 bis 40 %, bevorzugt 8 bis 25 %, bez. auf die Doppelbindungen, der Molmassen von 50.000 bis 500.000, deren Styrol-Copolymere in statistischer oder Block-Form, deren verzweigte oder sternförmige Polymere wie sie Stand der Technik zur Herstellung von "Lösungs-" oder "Masse-ABS" sind. Weitere in Frage kommende Kautschuke sind Kautschuke auf Basis von Ethylen-Propylen-Copolymerisaten oder auf Basis von Acrylester-Copolymerisate, wie nach dem Stand der Technik bekannt.

Aromatische Monoalkenyl-Verbindungen (1) sind Styrol, α-Methylstyrol, kernsubstituierte Alkylstyrole, kernsubstituierte Chlorstyrole.

Ethylenisch ungesättigte Nitrile (2) sind Acrylnitril, Methacrylnitril.

Copolymerisierende Verbindungen (3) sind z.B. Acrylsäure und Methacrylsäure, deren Ester wie Butylacrylat, Ethylhexylacrylat, Methylmethacrylat, Ethylmethacrylat, tert.-Butylmethacrylat, weiter Maleinsäureanhydrid, dessen Derivate wie Maleinsäureester, Fumarsäureester, Maleinsäureimid sowie N-substituierte Maleinimide wie vorteilhaft N-Cyclohexyl- oder N-Phenyl-Maleinimid, im weiteren Derivate des Methylenbernsteinsäureanhydrids sowie die Amide der aufgeführten ungesättigten Carbonsäuren.

Das erfindungsgemäße Verfahren kann diskontinuierlich oder kontinuierlich durchgeführt werden. Zur kontinuierlichen Polymerisation löst man vorteilhaft den Kautschuk (4) in den Monomeren (1-3) sowie gegebenenfalls dem Lösungsmittel (5) und polymerisiert in einen kontinuierlich beschickten, durchmischten und gerührten Tankreaktor bei einem stationären Monomerumsatz von 5 bis 15 Gew.-%, bezogen auf die Summe der polymerisierenden Monomeren (1-3), überführt die Polymerisationslösung kontinuierlich in einen zweiten Tankreaktor und versetzt sie dabei mit der Lösung des geeigneten Polymeren (7) und führt die radikalisch ausgelöste Polymerisation bis zu einem Monomerenumsatz, bezogen auf die Summe der Monomeren (1-3) von 30 bis 99 Gew.-% unter Durchmischen in einem oder mehreren weiter kontinuierlich betriebenen Rührkessel(n) in Kaskade oder in einem durchmischendem Pfropfenströmungsreaktor und/oder einer Kombination beider Reaktortypen zu Ende.

Die erfindungsgemäße diskontinuierliche Polymerisation wird in mindestens einem, bevorzugt zwei oder mehr gefüllten oder teilgefüllten durchmischten Rührkesseln durchgeführt. Der in den Monomeren und ggf. dem Lösungsmittel gelöste Kautschuk (1-5) wird vorgelegt, nachfolgend radikalisch initiiert bis zum angegebenen Monomerumsatz von 5 bis 15 Gew.-% polymerisiert, die Lösung des geeigneten Polymeren zu dem in Polymerisation befindlichen Gemisch dosiert und bis zum angegebenen Endumsatz von 30 bis 99 % polymerisiert.

Merkmal aller Varianten ist die zeitlich und/oder örtlich getrennte Zugabe der Lösung des geeigneten Polymeren (7) zum in Polymerisation befindlichen Gemisch aus Kautschuk und Monomeren.

Zur Vermischung der beiden Polymerlösungen können gängige Homogenisiervorrichtungen wie Rührwerk, Statikmischer oder Homogenisierdüsen verwendet werden. Bevorzugt ist die Verwendung von Homogenisierdüsen.

Die bei der Phaseninversion entstehenden dispers verteilten Kautschukteilchen können mit mechanischen Mitteln weiter zerkleinert werden, um die geeignete Teilchengrößenverteilung einzustellen. Dies kann in den Reaktoren, im Reaktorloop oder zwischen den Reaktoren stattfinden. Geeignete mechanische Mittel sind Rührwerke, schnell rotierende Zahnscheiben, Rotor-/Stator-Dispergatoren oder Kombinationen aus druckaufbauenden Pumpen und Strahldüsen. Bevorzugt ist die Verwendung von Strahldüsen zwischen dem ersten und dem zweiten Reaktor.

Die Polymerisation wird vorteilhaft bei Temperaturen von 60 bis 120°C, vorzugsweise am Siedepunkt des Lösungsmittel/Polymer-Gemisches durchgeführt. Es ist vorteilhaft, die Polymerisation bei Normaldruck auszuführen, möglich ist aber auch die Polymerisation bei geringem Überdruck bis zu 3 bar.

Die nach dem erfindungsgemäßen Verfahren hergestellten Polymermischungen können in an sich bekannter Weise durch Fällen in Lösemittel, durch Strippen mit Wasser und/oder Wasserdampf oder durch Eindampfen auf Entspannungsverdampfern, Strangverdampfern, Wendelrohrverdampfern, Dünnfilmverdampfern, Dünnschichtverdampfern, Fallfilmverdampfern, gerührten Mehrphasen-Verdampfern mit Knet- und Abstreifvorrichtungen oder Schneckenverdampfern etc. isoliert werden. Restmonomere und Lösungsmittel können in den Prozeß zurückgeführt werden. Die Mitverwendung von Treib- und Schleppmittel, wie u.a. Wasserdampf oder Stickstoff, ist möglich. Während der Polymeraufarbeitung können Zusatzstoffe, Stabilisatoren, Alterungsschutzmittel, Füllstoffe, Gleitmittel zugesetzt werden. Diese können aber auch nach Stand der Technik zu Beginn der Polymerisation den Ausgangslösungen zugesetzt werden.

Die nach dem erfindungsgemäßen Verfahren hergestellten Polymerlösungen können vor der Aufarbeitung mit Lösungen weiterer Polymerer versetzt und nachfolgend aufgearbeitet werden, oder aufgearbeitet und dann in bekannter Weise mit weiteren Polymeren in der Schmelze abgemischt werden.

### Beispiele

### Beispiel 1

In 600 g Toluol werden 256 g Poly-cis-Butadien mit einem 1,2-Vinylanteil von 11 % der Doppelbindungen und einem 1,4-Cis-Anteil von 38 % der Doppelbindungen ("Buna CB HX 502 C", Bayer Elastomeres Frances) zusammen mit 0,26 g 2,5-Di-tert.-Butylphenol bei 40°C unter N₂ gelöst und 968 g Styrol untergerührt. Die Lösung wird in einen 5-Liter Planschliffreaktor mit wandgängigem Rührer überführt und auf 60°C erwärmt. Nachfolgend werden 376 g Acrylnitril und 4,70 g tert.-Dodecylmercaptan hinzugefügt und bei Normaldruck auf 75°C erwärmt.

Die Polymerisation wird durch die Zugabe von 1,34 g tert.-Butylperpivalat in 70 g Toluol gestartet. Es kommt zu einer Trübung der Polymerisationslösung und einem Anstieg der Viskosität. Nach 30 min beträgt der Umsatz 11 Gew.% (bezogen auf Styrol und Acrylnitril, ermittelt durch Feststoffbestimmung einer Eindampfprobe bei 200°C) Nun werden innerhalb von 30 min 810 g einer 30 Gew.%igen Lösung von Poly(styrol-co-acrylnitril) (L-Wert: 60; ACN:Styrol=28:72) in Methylethylketon (2-Butanon) zusammen mit 3,36 g tert.-Dodecylmercaptan eingerührt. Die Viskosität der Reaktionsmischung fällt 11 min nach Beginn der Zugabe innerhalb von 3 min stark ab. Visko-elastische Zustände, die ein Rühren des Polymerisationsansatzes erschweren, werden nicht beobachtet. Die Temperatur wird nachfolgend auf 80°C erhöht und dann weitere 462 g der 30 Gew.%igen Lösung von Poly(styrol-co-acrylnitril) in Methylethylketon (2-Butanon) zusammen mit 1,68 g tert.-Butylperoctoat und 1,60 g Irganox 1076® (Ciba Geigy) in 4,5 Std eingerührt und 4 Std bei 87°C nachpolymerisiert. Der Umsatz beträgt 65 Gew.% (bezogen auf Styrol und Acrylnitril). Der Kautschukgehalt, bestimmt durch Bilanzierung des Ansatzes, beträgt 16 Gew.%.

Die Polymerisationslösung wird auf einem Entgasungsextruder eingedampft und granuliert. Zur Bestimmung der Kerbschlagzähigkeit wird das Granulat nachfolgend bei folgenden Bedingungen zu Normkleinstäben abgespritzt:
- Massetemperatur:: 230°C
- Werkzeugtemperatur:: 60°C
- Einspritzzeit:: 2,8 Sek.

An den Normkleinstäben mit V-Kerbe wird das Bruchverhalten durch schnelle Dreipunktbiegung (Schlagbeanspruchung an einer registrierenden Fallapparatur) untersucht. Es ergibt sich folgende Kerbschlagzähigkeit:
- aₖ RT:: 35,4 kJ/m²
- Maximalkraft Fm:: 155 N.

### Beispiel 2

Eine wie in Beispiel 1 hergestellte ABS-Formasse mit einem Kautschukgehalt von ca. 20 Gew.% wird im Verhältnis 1 : 0,44 mit Poly(styrol-co-acrylnitril) (L-Wert: 60; ACN:Styrol=28:72) auf einer konisch entgegengesetzt drehenden Zweiwellen-Laborschnecke der Firma Haake, Karlsruhe, bei 118 U/min extrudiert und granuliert. Die so hergestellte ABS-Formmasse verfügt über einen Kautschukgehalt von 14 Gew.%.

Die anwendungstechnische Prüfung der mechanischen Eigenschaften erbringt folgende Ergebnisse:

**Tabelle I**

| Mechanische Eigenschaften der ABS-Formmasse | | | | | | |
|---|---|---|---|---|---|---|
| **Beispiel** | **a**_{**k**} **23°C (kJ/m**^{**2**}**)** | **a**_{**k**} **-40°C (kJ/m**^{**2**}**)** | **He 30˝240°C (N/mm**^{**2**}**)** | **MVR 10/220 (ml/10min)** | **Vicat B 120 (°C)** | **Glanz 240°/70° 20° Meßw. (%)** |
| 2 | **18** | **7** | **86** | **12,5** | **103** | **14** |

### Beispiel 3 bis 8

Der im Beispiel 1 beschriebene Polymerisationsansatz wird mit unterschiedlich konzentrierten Lösungen von Poly(styrol-co-acrylnitril) und mit Poly(styrol-co-acrylnitril) unterschiedlicher Zusammensetzung durchgeführt.

**Tabelle II**

| Zusammensetzung der Poly(styrol-co-acrylnitril)-Polymere, der Polymerlösungen und der hergestellten ABS-Formmassen | | | | | | |
|---|---|---|---|---|---|---|
| **Beispiel** | **Konzentration Polymerlösung (%)** | **KA-Gehalt Endprodukt** | **Polymer im Endprodukt (%)** | **Styrol (%)** | **Acrylnitril (%)** | **L-Wert** |
| 3 | **10** | **14** | **6,0** | **72** | **28** | **60** |
| 4 | **20** | **18** | **17,8** | **72** | **28** | **60** |
| 5 | **40** | **14** | **35,6** | **72** | **28** | **60** |
| 6 | **20** | **14** | **13,6** | **76** | **24** | **80** |
| 7 | **20** | **14** | **13,6** | **72** | **28** | **100** |
| 8 | **20** | **14** | **13,6** | **66** | **34** | **80** |

**Tabelle III**

| Mechanische Eigenschaften der ABS-Formmassen | | | | | | |
|---|---|---|---|---|---|---|
| **Beispiel** | **a**_{**k**} **23°C (kJ/m**^{**2**}**)** | **a**_{**k**} **-40°C (kJ/m**^{**2**}**)** | **Hc 30˝240°C (N/mm**^{**2**}**)** | **MVR10/220 (ml/10min)** | **Vicat B 120 (°C)** | **Glanz 240°/70° 20° Meßw. (%)** |
| 3 | **25** | **7** | **91** | **15** | **105** | **n.b.** |
| 4 | **37** | **n.b.** | **n.b.** | **n.b.** | **n.b.** | **n.b.** |
| 5 | **15** | **7** | **92** | **13** | **104** | **n.b.** |
| 6 | **29** | **9** | **92** | **12** | **106** | **20** |
| 7 | **28** | **8** | **92** | **11** | **107** | **12** |
| 8 | **26** | **9** | **92** | **13** | **107** | **21** |

### Beispiel 9 bis 17

Der im Beispiel 1 beschriebene Polymerisationsansatz wird mit einer Reihe von Styrol- und α-Methylstyrol-enthaltenden Copolymeren durchgeführt und die Produkte teilweise gemäß Beispiel 2 mit Poly(styrol-co-acrylnitril) compoundiert.

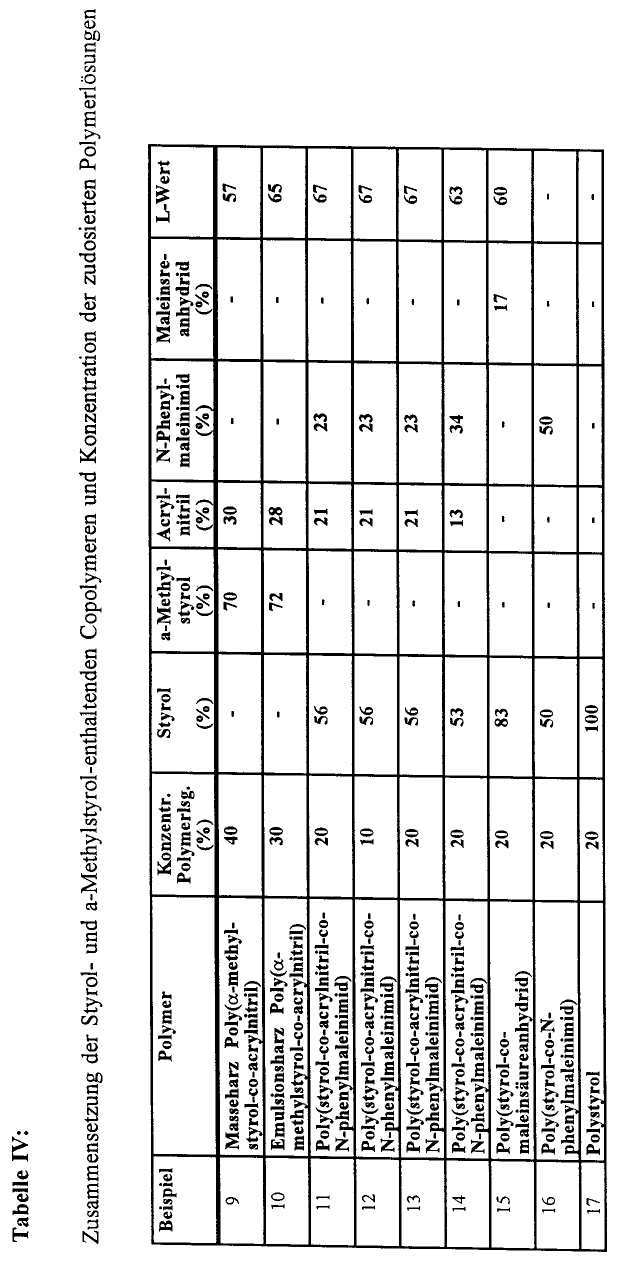

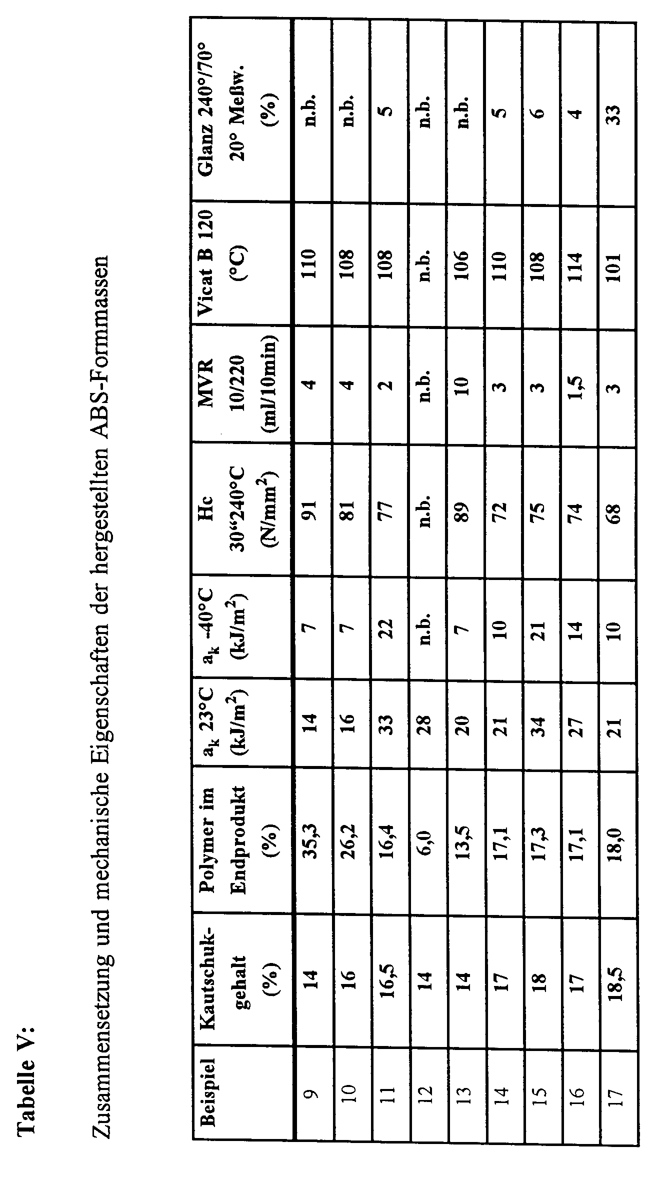

### Beispiel 18 bis 22

Der im Beispiel 1 beschriebene Polymerisationsansatz wird mit einer Reihe von (Meth)acrylsäureester-enthaltenden Copolymeren durchgeführt und die Produkte teilweise gemäß Beispiel 2 mit Poly(styrol-co-acrylnitril) compoundiert.

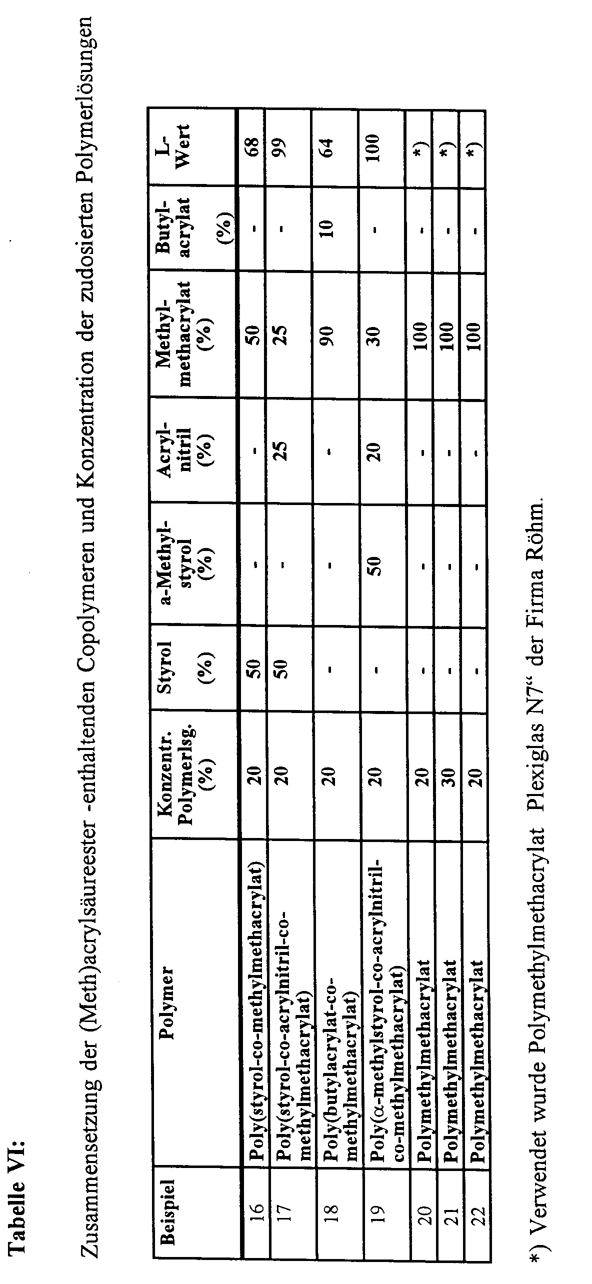

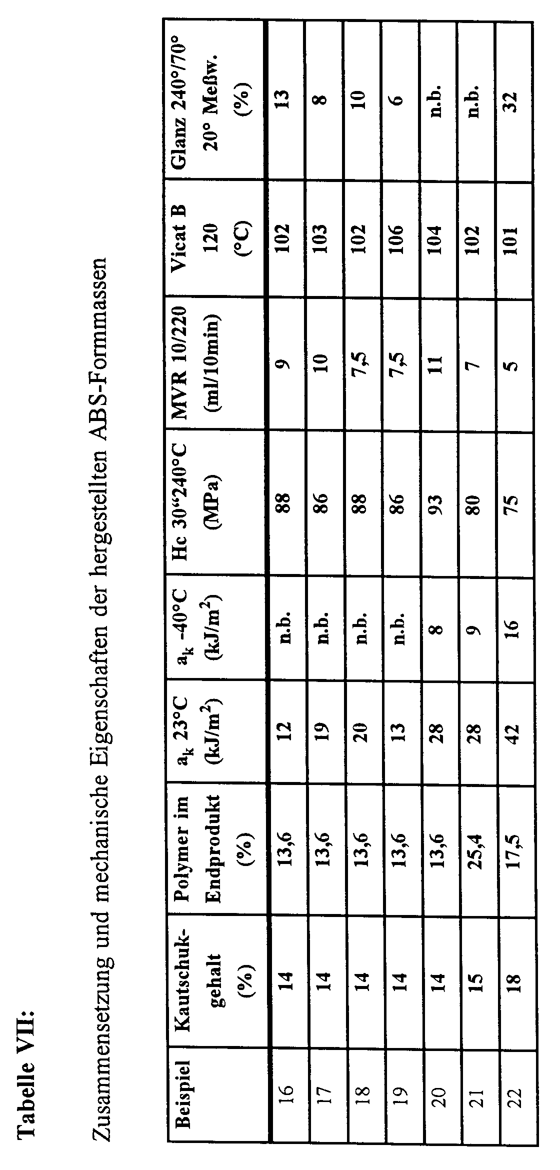

### Beispiel 23 bis 24:

Der im Beispiel 1 beschriebene Polymerisationsansatz wird mit einem Co-Polycarbonat, bestehend aus 35 Mol% des Bisphenols 1,1-Bis(4-hydroxyphenyl)-3,3,5-trimethylcyclohexan und 65 Mol% des Bisphenols Bis(4-hydroxyphenyl)-dimethylpropan durchgeführt gemäß Beispiel 2 mit Poly(styrol-co-acrylnitril) compoundiert.

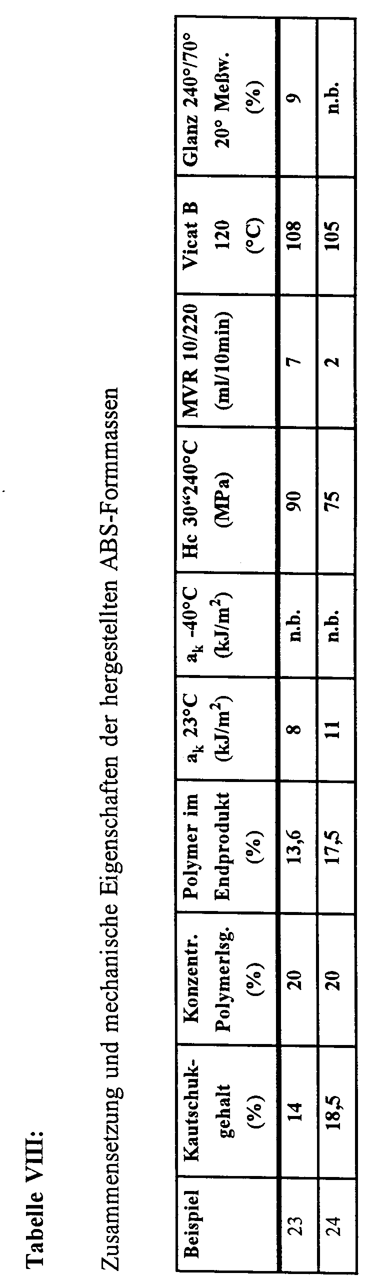

## Patentansprüche

1. Verfahren zur Herstellung von ABS-Formmassen worin eine Lösung von Polymeren in Lösungsmitteln der Gruppe (A) allmählich einem in Polymerisation befindlichen Gemisch aus vorgebildetem, löslichem Kautschuk, aromatischen Monoalkenyl-Verbindungen, ethylenisch ungesättigten Nitrilen, gegebenenfalls weiteren copolymerisierbaren Vinyl-Verbindungen, sowie gegebenenfalls einem Lösungsmittel aus der Gruppe (B) oder einem Gemisch aus Lösungsmitteln der Gruppen (A) und (B) zugeführt wird, wobei die allmähliche Zugabe der Lösung des Polymeren zu dem polymerisierenden Gemisch vor Beginn der Phaseninversion bei einem Umsatz der Monomeren von 5 bis 15 % und einer Viskosität des polymerisierenden Gemischs unter 20 Pa·sec bei gleichzeitiger Weiterführung der Polymerisation begonnen wird, das Lösungsmittel der Gruppe (A) ein aliphatischer (C₁-C₈) oder cycloaliphatischer Alkohol, Keton, Ether, Ester und/oder Nitril, und das Lösungsmittel der Gruppe (B) ein aliphatischer (C₄-C₁₀), cycloaliphatischer und/oder aromatischer Kohlenwasserstoff ist.

2. Verfahren nach Anspruch 1, worin das Polymer ein Copolymerisat aus mindestens 50 Gew.-% Styrol und weniger als 50 Gew.-% Acrylnitril, N-Phenylmaleinimid, Maleinsäureanhydrid oder Mischugen daraus ist.

3. Verfahren nach Anspruch 1, worin das Polymer ein Copolymerisat aus mindestens 50 Gew-% α-Methylstyrol und weniger als 50 Gew.-% Acrylnitril, Maleinsäureanhydrid, N-Phenylmaleinimid oder Mischungen daraus ist.

4. Verfahren nach Anspruch 1, worin das Polymer ein Copolymerisat aus mindestens 20 Gew.-% Methylmethacrylat und weniger als 80 Gew.-% Styrol, α-Methylstyrol, Acrylnitril, Butylacrylat oder N-Phenylmaleinimid ist.

5. Verfahren nach Anspruch 1, worin das Poly(styrol-co-acrylnitril) ist.

6. Verfahren nach Anspruch 1, worin das Polymer Poly(styrol-co-acrylnitril-co-N-phenylmaleinimid) ist.

7. Verfahren nach Anspruch 1, worin das Polymer Polymethylmethacrylat ist.

8. Verfahren nach Anspruch 1, dadurch gekennzeichnet, worin das Polymer ein Co- oder Homo-Polycarbonate, enthaltend mindestens 10 Gew.% des Bisphenols 1,1-Bis(4-hydroxyphenyl)-3,3,5-trimethylcyclohexan ist.
